# EUROPÄISCHE PATENTANMELDUNG

(11) **EP 3 707 977 A1**
(43) Veröffentlichungstag der Anmeldung: **16.09.2020**
(21) Anmeldenummer: 20161074.8
(22) Anmeldetag: 05.03.2020
(51) Int. Cl.: A01B 21/08, A01B 73/06, A01B 63/16, A01B 71/02

(54) **SCHEIBENEGGENVORRICHTUNG ZUR BODENBEARBEITUNG**

(30) Priorität: 07.03.2019 DE 202019101292 U
(71) Anmelder: Fliegl Agro-Center GmbH, 84556 Kastl (DE)
(72) Erfinder: Fliegl sen., Josef, 84556 Kastl (DE)
(74) Vertreter: Nußbaum, Christopher

(57) **Zusammenfassung**

Die Erfindung betrifft eine Scheibeneggenvorrichtung (10) zur Bodenbearbeitung, umfassend eine Rahmenstruktur (12); wenigstens ein mit der Rahmenstruktur (12) zumindest mittelbar verbundenes Rad (26); zumindest einen Trägerarm (14) mit mehreren in zumindest einer Reihe angeordneten Scheiben (22) zur Bodenbearbeitung; wobei der Trägerarm (14) um eine in Hochrichtung (z) der Scheibeneggenvorrichtung (10) verlaufende Achse (18) verschwenkbar an der Rahmenstruktur (12) gelagert und mittels einem Verstellmechanismus bezogen auf eine Querrichtung (y) der Scheibeneggenvorrichtung (10) zwischen einer an die Rahmenstruktur (12) herangeklappten Nichtgebrauchsstellung und unterschiedlich weit herausgeschwenkten Arbeitsstellungen verstellbar ist.

## Beschreibung

Die vorliegende Erfindung betrifft eine Scheibeneggenvorrichtung zur Bodenbearbeitung.

Scheibeneggen zur Bodenbearbeitung sind an sich bekannt. Scheibeneggen, auch Tellereggen genannt, umfassen üblicherweise mehrere gewölbte Scheiben, die schräggestellt rotierend den Boden ähnlich einem Pflug aufschneiden und durchmischen können. Wesentlich bei Scheibeneggen ist unter anderem, wie schräg die Scheiben zu einer Fahrtrichtung angestellt sind. Würden die Scheiben bezogen auf die Fahrtrichtung nicht schräggestellt, wäre deren Wirkung hinsichtlich des Durchmischens des Bodens sehr gering bis nicht vorhanden. Eine zu starke Schrägstellung hingegen wäre ebenfalls mit Nachteilen verbunden.

Es ist die Aufgabe der vorliegenden Erfindung, eine Scheibeneggenvorrichtung bereitzustellen, mittels welcher eine besonders gute Bodenbearbeitung ermöglicht wird.

Diese Aufgabe wird durch eine Scheibeneggenvorrichtung mit den Merkmalen des Anspruchs 1 gelöst. Weitere mögliche Ausgestaltungen der Erfindung sind in den Unteransprüchen angegeben.

Die erfindungsgemäße Scheibeneggenvorrichtung zur Bodenbearbeitung umfasst eine Rahmenstruktur und wenigstens ein mit der Rahmenstruktur zumindest mittelbar verbundenes Rad. Die Rahmenstruktur kann als Fahrgestell dienen, an welchem z.B. eine Achse mit zwei Rädern angeordnet ist. Die Scheibeneggenvorrichtung umfasst zudem zumindest einen Trägerarm mit mehreren in zumindest einer Reihe angeordneten Scheiben zur Bodenbearbeitung. Bei dem Trägerarm kann es sich um einen seitlich an der Rahmenstruktur angeordneten Seitenarm handeln, an welchem mehrere der Scheiben angeordnet sind, mittels welchen der Boden aufgeschlitzt und durchmischt werden kann. Die Scheiben können bezogen auf eine Haupterstreckungsrichtung des Trägerarms z.B. in einer einzigen Reihe nebeneinander angeordnet sein. Es ist auch möglich, dass der Trägerarm mehrere hintereinander angeordnete Reihen von Scheiben aufweist.

Die Scheiben können einzeln oder auch in ihrer Gesamtheit drehbar gelagert sein. Beim Überfahren des Bodens rollen die Scheiben also auf dem Boden ab. Durch eine Schrägstellung gegenüber einer Fahrtrichtung der Scheibeneggenvorrichtung schlitzen diesen den Boden nicht nur auf, sondern durchmischen diesen auch.

Der zumindest eine Trägerarm ist um eine in Hochrichtung der Scheibeneggenvorrichtung verlaufende Achse verschwenkbar an der Rahmenstruktur gelagert und mittels einem Verstellmechanismus bezogen auf eine Querrichtung der Scheibeneggenvorrichtung zwischen einer an die Rahmenstruktur herangeklappten Nichtgebrauchsstellung und unterschiedlich weit herausgeschwenkten Arbeitsstellungen verstellbar. Bei der Scheibeneggenvorrichtung kann es sich z.B. um einen Anhänger handeln, der an ein Zugfahrzeug, z.B. an einen Traktor, angehängt werden kann. Falls die Scheiben momentan nicht zur Bodenbearbeitung verwendet werden sollen, kann der Trägerarm in die Nichtgebrauchsstellung verschwenkt werden. Sollen die Scheiben hingegen zur Bodenbearbeitung verwendet werden, kann der wenigstens eine Trägerarm unterschiedlich weit von der Rahmenstruktur weggeschwenkt werden, sodass die verschiedenen Arbeitsstellungen eingenommen werden können.

Mittels der Scheibeneggenvorrichtung ist es auch einfache Weise möglich, den Anstellwinkel der Scheiben gegenüber einer Fahrtrichtung der Scheibeneggenvorrichtung zu verändern. Dafür muss lediglich der Verstellmechanismus entsprechend betätigt werden. Merkt ein Landwirt z.B. während der Verwendung der Scheibeneggenvorrichtung, dass das gewünschte Bearbeitungsergebnis hinsichtlich des Aufschlitzens und Durchmischen des Bodens nicht erzielt wird, kann der den Anstellwinkel der Scheiben gegenüber der Fahrtrichtung der Scheibeneggenvorrichtung einfach verstellen. Dazu wird der Trägerarm einfach mittels des Verstellmechanismus einfach bezogen auf die Querrichtung der Scheibeneggenvorrichtung weiter nach außen oder nach innen geschwenkt. So kann z.B. auf sich veränderte Bodenbedingungen beim Befahren eines Felds flexibel reagiert werden.

Eine mögliche Ausführungsform der Erfindung sieht vor, dass der Verstellmechanismus einen Hydraulikzylinder umfasst, welcher mit einem Längsende gelenkig mit der Rahmenstruktur und mit einem anderen Längsende gelenkig am Trägerarm befestigt ist. Der eigentliche Zylinder des Hydraulikzylinders kann z.B. gelenkig mit der Rahmenstruktur verbunden sein, wobei der eigentliche Kolben des Hydraulikzylinders gelenkig am Trägerarm gelagert sein kann. Die gelenkige Lagerung ist derart, dass zumindest ein jeweiliger Drehfreiheitsgrad um jeweilige zur Hochrichtung der Scheibeneggenvorrichtung verlaufende Achsen gegeben ist. Beim Wegschwenken und Heranschwenken des Trägerarms wird der Hydraulikzylinder also entsprechend von der Rahmenstruktur weg bzw. an diese herangeschwenkt. Der Hydraulikzylinder kann z.B. über entsprechende Leitungen und Schnittstellen mit einer Hydraulikflüssigkeit versorgt und betrieben werden. Die eigentliche Energieversorgung kann beispielsweise über ein entsprechendes Aggregat eines Zugfahrzeugs erfolgen, alternativ oder zusätzlich kann die Scheibeneggenvorrichtung selbst auch ein entsprechendes Aggregat aufweisen. Beispielsweise kann der Verstellmechanismus von einem Traktor aus angesteuert werden, sodass das ein Benutzer sein Zugfahrzeug zur Verstellung des Trägerarms nicht verlassen muss. Die Verstellung des Trägerarms kann aber auch über andere Wirkprinzipien erfolgen, z.B. durch elektrische Verstellung.

Eine weitere mögliche Ausführungsform der Erfindung sieht vor, dass die Schreiben auf einer Kette hintereinander aufgereiht befestigt sind, welche drehbar am Trägerarm gelagert ist. Die Kette kann sich während der Fahrt ein Stück weit bewegen. Bodenunebenheiten können so beispielsweise durch die Kette ausgeglichen werden, ohne dass es einer gesonderten Federung und/oder Dämpfung der einzelnen Scheiben bedarf. Die Belastungen auf die Rahmenstruktur können dadurch relativ gering gehalten werden. Die Scheiben sind insbesondere verdrehfest mit der Kette verbunden. Die Schreiben drehen also beim Überfahren des Bodens synchron, da die gesamte Kette sich zumindest im Wesentlichen um ihre Längsachse dreht. Alternativ ist es auch möglich, dass die Scheiben drehbar an der Kette gelagert sind, wobei die Kette selbst drehbar oder drehfest mit der Rahmenstruktur verbunden sein kann. Zudem ist es auch möglich, dass der Kette eine Achse vorzusehen, auf welche die Scheiben nebeneinander angeordnet sind, wobei die Achse z.B. drehbar an der Rahmenstruktur gelagert sein kann. Alternativ können die Scheiben auch drehbar auf bzw. an der Achse gelagert sein, wobei die Achse beispielsweise verdrehfest mit der Rahmenstruktur verbunden sein kann.

Gemäß einer weitern möglichen Ausführungsform der Erfindung ist es vorgesehen, dass am Trägerarm eine Spanneinrichtung angeordnet ist, mittels welcher eine Spannung der Kette einstellbar ist. Längt sich beispielsweise die Kette mit der Zeit, ist es mit der Spanneinrichtung möglich, eine wunschgemäße Kettenspannung wiederherzustellen. Es kann z.B. sein, dass es temperaturbedingt zu Längenänderungen bei der Kette kommt. Auch ist es möglich, dass die Kette sich aufgrund mechanischer Beanspruchungen dehnt. In solchen Fällen kann die Kette wieder problemlos gespannt werden, um ein gutes Bodenbearbeitungsergebnis zu erzielen. Die Spanneinrichtung kann z.B. über einen Gewindeantrieb verfügen, sodass dass durch eine Drehbewegung eine Lagerstelle, z.B. ein Kugellager oder dergleichen, translatorisch verschoben werden kann, welches zur Lagerung der Kette dient.

Eine weitere mögliche Ausführungsform der Erfindung sieht vor, dass die Scheibeneggenvorrichtung einen Höhenverstellmechanismus aufweist, mittels welchem ein Abstand zwischen Boden und den Scheiben veränderbar ist. Wird der wenigstens eine Trägerarm in seine eingeklappte, also an die Rahmenstruktur herangeschwenkte Nichtgebrauchsstellung bewegt, kann der Abstand zwischen Boden und den Aufstandsstellen der Scheiben so vergrößert werden, dass die Scheibeneggenvorrichtung problemlos Felder oder auch Straßen befahren kann, ohne dass die Scheiben in Kontakt mit dem Boden geraten. Der Höhenverstellmechanismus kann beispielsweise direkt von einem Zugfahrzeug aus ansteuerbar sein. So muss ein Benutzer z.B. seinen Traktor gar nicht verlassen, um die Scheiben abzusenken oder anzuheben. Eine Verstellung direkt an der Scheibeneggenvorrichtung ist alternativ oder zusätzlich auch möglich.

Gemäß einer weiteren möglichen Ausführungsform der Erfindung ist es vorgesehen, dass mittels des Höhenverstellmechanismus die Rahmenstruktur gegenüber dem wenigstens einen Rad anhebbar und absenkbar ist. Die Scheibeneggenvorrichtung beispielsweise eine Art Niveauregulierung als Bestandteil des Höhenverstellmechanismus aufweisen, mittels welchem ein Fahrwerk, welches Teil der Rahmenstruktur sein kann, angehoben und abgesenkt werden kann. Da der wenigstens eine Trägerarm an der Rahmenstruktur befestigt ist, bewirkt eine Absenkung und Anhebung der Rahmenstruktur auch eine entsprechende Absenkung und Anhebung des Trägerarms, infolgedessen die Scheiben so weit angehoben werden können, dass sie den Boden nicht berühren. Zum Beispiel kann eine das wenigstens eine Rad aufweisende Achse unter Vermittlung eines Hydraulikzylinders mit der Rahmenstruktur verbunden sein. Durch Ausfahren und Einfahren des Hydraulikzylinders, welcher Bestandteil des Höhenverstellmechanismus sein kann, kann die Rahmenstruktur mitsamt dem Trägerarm angehoben und abgesenkt werden.

Eine weitere mögliche Ausführungsform der Erfindung sieht vor, dass die Scheibeneggenvorrichtung eine mit der Rahmenstruktur verbundene Zugdeichsel aufweist, welche mittels des Höhenverstellmechanismus höhenverstellbar ist. Die Zugdeichsel kann sich z.B. an einer Anhängerkupplung eines Zugsfahrzeugs abstützen, wobei ein Abstand in Hochrichtung zwischen Anhängerkupplung und Zugdeichsel verstellbar ausgebildet sein kann. So können die Scheiben auch so weit angehoben werden, dass diese bei Nichtgebrauch nicht mit dem Boden in Kontakt gelangen.

Gemäß einer weiteren möglichen Ausführungsform der Erfindung ist es vorgesehen, dass der Trägerarm mittels des Verstellmechanismus stufenlos verschwenkbar ist. Dadurch kann ein Grad der Querstellung der Scheiben gegenüber der Fahrtrichtung besonders individuell an die jeweiligen Randbedingungen eingestellt werden. Es ist auch möglich, dass verschiedene Winkelstellungen voreingestellt sind und/oder abgespeichert werden können. Auf diese Weise kann ein Nutzer sich für verschiedene Randbedingungen bewährte Schwenkpositionen abrufen und/oder speichern.

Eine weitere mögliche Ausführungsform der Erfindung sieht vor, dass die Scheibeneggenvorrichtung zwei der Trägerarme aufweist, wobei diese an gegenüberliegenden Längsseiten der Rahmenstruktur verschwenkbar gelagert sind. So können die beiden Trägerarme bei Bedarf seitlich ausgeklappt und eingeklappt werden. Durch die beiden Trägerarme wird eine besonders große Bearbeitungsbreite realisiert. Zudem sind die auf die Scheibeneggenvorrichtung wirkenden Belastungen dadurch zumindest annähernd symmetrisch.

Gemäß einer weiteren möglichen Ausführungsform der Erfindung ist es vorgesehen, dass jeweilige Lagerstellen, an welchen die Trägerarme verschwenkbar an der Rahmenstruktur gelagert sind, in Längsrichtung der Scheibeneggenvorrichtung voneinander beabstandet angeordnet sind, wobei jeweilige Teilbereiche der Trägerarme sich ab einem bestimmten Schwenkwinkel bezogen auf die Querrichtung in einem mittleren Bereich der Scheibeneggenvorrichtung überlappen. Somit wird eine lückenlose Bodenbearbeitung durch die an den Trägerarmen angeordneten Scheiben ermöglicht. Jeweilige Abschnitte der Trägerarme ragen also zumindest ab einem bestimmten Schwenkwinkel der Trägerarme nach innen, wobei diese Abschnitte sich bezogen auf die Querrichtung überlappen. Die Lagerstellen sind so weit voneinander beabstandet, dass die Scheiben an den jeweiligen Trägerarmen sich in den verschiedenen einstellbaren Arbeitsstellungen nicht gegenseitig berühren.

Insbesondere sind die die Trägerarme zumindest im Wesentlichen synchron und ohne miteinander zu kollidieren zwischen der herangeklappten Nichtgebrauchsstellung und ihren Arbeitsstellungen verschwenkbar. Dadurch ergibt eine besonders einfache Ansteuerung der Verschwenkbewegung. Es muss also nicht erst der eine Trägerarm und dann der andere Trägerarm nach außer oder nach innen geschwenkt werden. Stattdessen können beide Trägerarme gleichzeitig nach außen und nach innen geschwenkt werden, und zwar ohne dass diese kollidieren. Der Verstellmechanismus ist dazu eingerichtet, die Verschwenkbewegung so ausführen, dass die Trägerarme gar nicht miteinander kollidieren können.

Eine weitere mögliche Ausführungsform der Erfindung sieht vor, dass die Scheibeneggenvorrichtung wenigstens eine Schnittstelle aufweist, sodass an der Rahmenstruktur ein weitere Rahmenstruktur mit wenigstens einem verschwenkbar daran angeordneten Trägerarm befestigbar ist. So können beispielsweise zwei der Rahmenstruktur in Längsrichtung hintereinander angeordnet und aneinander befestigt werden. Weisen beiden Rahmenstrukturen z.B. jeweils zwei der verschwenkbaren Trägerarme auf, kann über eine ziemlich große Bearbeitungsbreite eine Bodenbearbeitung erfolgen, wobei beim einmaligen Überfahren des Bodens dieser zweimal hintereinander von den jeweiligen Scheiben überfahren wird.

Insbesondere ist es möglich, dass die weitere Rahmenstruktur derart anordnenbar ist, dass der daran angeordnete Trägerarm gegenläufig zum anderen Trägerarm verschwenkbar ist. Der Anstellwinkel der Scheiben gegenüber der Fahrtrichtung kann also bei dem zumindest einen vorderen Trägerarm umgekehrt zum Anstellwinkel der Scheiben des hinteren Trägerarms an der anderen Rahmenstruktur eingestellt werden. So kann der Boden mittels der am vorderen Trägerarm befestigen Scheiben aufgerissen und mittel der Scheiben an hinteren Trägerarm der weiteren Rahmenstruktur wieder bedeckt werden. Weisen die Rahmenstrukturen jeweils zwei der Trägerarme auf, die links und rechts an den jeweiligen Rahmenstrukturen angeordnet sind, können die Trägerarmpaare je Rahmenstruktur z.B. V-förmig und gegenläufig nach außen geschwenkt werden.

Weitere mögliche Vorteile, Merkmal und Einzelheiten der Erfindung ergeben aus der nachfolgenden Beschreibung bevorzugter Ausführungsbeispiele sowie an der Zeichnung. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht einer Scheibeneggenvorrichtung, umfassend eine Rahmenstruktur, an welcher zwei Räder und zwei seitlich nach außen und innen schwenkbare Trägerarme angeordnet sind, an welchen jeweils eine Kette mit daran befestigten Scheiben zur Bodenbearbeitung angebracht ist, wobei die Trägerarme in einer nach außen geschwenkten Arbeitsposition angeordnet sind;
- Fig. 2: eine weitere Perspektivansicht der Scheibeneggenvorrichtung, wobei die Trägerarme in einer nach innen geschwenkten Nichtgebrauchsstellung angeordnet sind;
- Fig. 3: eine Draufsicht auf die Scheibeneggenvorrichtung, wobei die Trägerarme in ihrer nach innen geschwenkten Nichtgebrauchsstellung angeordnet sind;
- Fig. 4: eine Detailansicht eine Längsendes des Trägerarms, welcher eine Spanneinrichtung zum Spannen der Kette aufweist;
- Fig. 5: eine weitere Draufsicht auf die Scheibeneggenvorrichtung, wobei die Trägerarme in einer nach außen geschwenkten Gebrauchsstellung angeordnet sind; und in
- Fig. 6: eine Draufsicht auf eine weitere mögliche Ausführungsform der Scheibeneggenvorrichtung, wobei diese eine weitere Rahmenstruktur mit zwei daran verschwenkbar gelagerten Trägerarmen mit jeweiligen Scheiben aufweist.

In den Figuren sind gleiche oder funktionsgleiche Elemente mit den gleichen Bezugszeichen versehen worden.

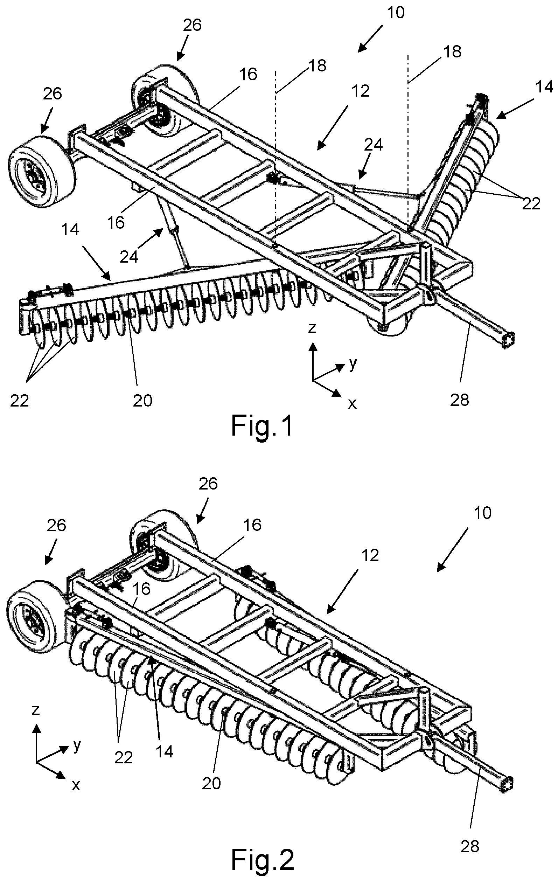

Eine Scheibeneggenvorrichtung 10 ist in einer Perspektivansicht in Fig. 1 gezeigt. Die Scheibeneggenvorrichtung 10 umfasst eine Rahmenstruktur 12, an welcher zwei verschwenkbare Trägerarme 14 gelagert sind. Die Trägerarme 14 sind an jeweiligen Längsträgern 16 der Rahmenstruktur 12 um jeweilige in Hochrichtung z der Scheibeneggenvorrichtung 10 verlaufende Achsen 18 verschwenkbar gelagert. An jedem Trägerarm 14 ist eine Kette 20 befestigt, wobei an jeder Kette 20 mehrere Scheiben 22 angeordnet sind, wobei der Übersichtlichkeit halber nur ein paar der Scheiben 22 mit Bezugszeichen versehen worden sind. Die Scheiben 22 dienen dazu, einen mittels der Scheibeneggenvorrichtung 10 überfahrenen Boden aufzuschlitzen und zu durchmischen.

Die Ketten 20 können um ihre jeweilige Längsachse verdrehbar an den Trägerarmen 14 gelagert sein, wobei es in dem Fall vorgesehen sein kann, dass die Scheiben 22 selbst verdrehfest an den Ketten 20 befestigt sind. Es ist auch möglich, dass die Ketten 20 verdrehfest an den Trägerarmen 14 befestigt sind, wobei in dem Fall die Scheiben 22 verdrehbar an den Ketten 20 gelagert sein könne. Es ist auch möglich, dass sowohl die Ketten 20 als auch die Scheiben 22 verdrehbar gelagert sind. Wesentlich ist, dass die Scheiben 22 auf dem überfahrenen Boden abrollen können.

Die Scheibeneggenvorrichtung 10 umfasst einen nicht näher bezeichneten Verstellmechanismus, der zwei Hydraulikzylinder 24 aufweist. Die Hydraulikzylinder 24 dienen dazu, die Trägerarme 14 bezogen auf die Querrichtung y der Scheibeneggenvorrichtung 10 nach außen und nach innen zu schwenken. Wie zu erkennen sind die Hydraulikzylinder 24 mit nicht näher bezeichneten Längsenden einerseits an der Rahmenstruktur 12 und andererseits an den Trägerarmen 14 befestigt. Die Hydraulikzylinder 24 sind sowohl an der Rahmenstruktur 12 als auch an den Trägerarmen 14 gelenkig befestigt, sodass beim nach außen und nach innen Schwenken der Trägerarme 14 die Hydraulikzylinder 24 entsprechend der Verschwenkbewegung folgen können. Vorliegend sind die Trägerarme 14 in einer nach außen geschwenkten Arbeitsstellung gezeigt. Mittels der Hydraulikzylinder 24 können die Trägerarme 14 stufenlos in verschieden weit nach außen geschwenkte Arbeitsstellungen bewegt und auch in eine seitlich an die Rahmenstruktur 12 herangeklappte Nichtgebrauchsstellung verstellt werden.

Zudem umfasst die Scheibeneggenvorrichtung 10 zwei Räder 26, die an nicht näher bezeichneten Radaufhängungen oder einer Achse befestigt und so mit der Rahmenstruktur 12 verbunden sein können. Ferner weist die Scheibeneggenvorrichtung 10 eine Zugdeichsel 28 auf, sodass die Scheibeneggenvorrichtung 10 an ein Zugfahrzeug, z.B. einen Traktor, angekoppelt und mittels diesem zur Bodenbearbeitung beispielsweise über ein Feld gezogen werden kann.

Durch die verschwenkbare Lagerung der Trägerarme 14 ist es möglich, einen Anstellwinkel der Scheiben 22 gegenüber einer Fahrrichtung der Scheibeneggenvorrichtung 10 und somit zur Längsrichtung x der Scheibeneggenvorrichtung 10 zu variieren. Je nach Bodenbeschaffenheit und anderen Randbedingungen, wie z.B. einem Bewuchs des Bodens, der Feuchtigkeit des Bodens und dergleichen, können die Trägerarme 14 in einer derartige Arbeitsstellung verschwenkt werden, dass ein möglichst gutes Arbeitsergebnis bei der Bodenbearbeitung mittels der Scheibeneggenvorrichtung 10 erzielbar ist. Zudem können die Trägerarme 14 einfach durch entsprechende Betätigung der Hydraulikzylinder 24 auch während der Bodenbearbeitung bei Bedarf schnell und unkompliziert verstellt werden.

Die zuvor erwähnte Nichtgebrauchsstellung der Trägerarme 14 ist in Fig. 2 zu erkennen, in der die Scheibeneggenvorrichtung 10 in einer weiteren Perspektivansicht gezeigt ist. In der Nichtgebrauchsstellung sind die Trägerarme 14 an die Rahmenstruktur 12 herangeschwenkt, wobei die Scheiben 22 zumindest im Wesentlichen quer zur Längsrichtung x und somit zumindest im Wesentlichen quer zur Fahrtrichtung der Scheibeneggenvorrichtung 10 angeordnet sind. Die Scheibeneggenvorrichtung 10 kann einen hier nicht näher bezeichneten Höhenverstellmechanismus aufweisen, mittels welchem welchen ein Abstand zwischen Boden und den Scheiben 22 veränderbar ist. Dadurch können die Scheiben 22 soweit angehoben werden, dass diese den Boden nicht mehr berühren.

Beispielsweise kann der Höhenverstellmechanismus einen oder mehrere hier nicht dargestellte Hydraulikzylinder aufweist, mittels welchen die Rahmenstruktur 12 in Hochrichtung z von den Rädern nach oben verstellt und abgesenkt werden kann, um die Scheiben 22 in Eingriff mit dem Boden zu bringen bzw. genügend Bodenfreiheit zu schaffen, sodass insbesondere in der Nichtgebrauchsstellung die Scheiben 22 den Boden nicht berühren.

Als Teil des Höhenverstellmechanismus kann auch die Zugdeichsel 28 höhenverstellbar sein. So kann die Rahmenstruktur 12 unter Vermittlung der Zugdeichsel 28 angehoben und abgesenkt werden, um die Scheiben 22 vom Boden abzuheben.

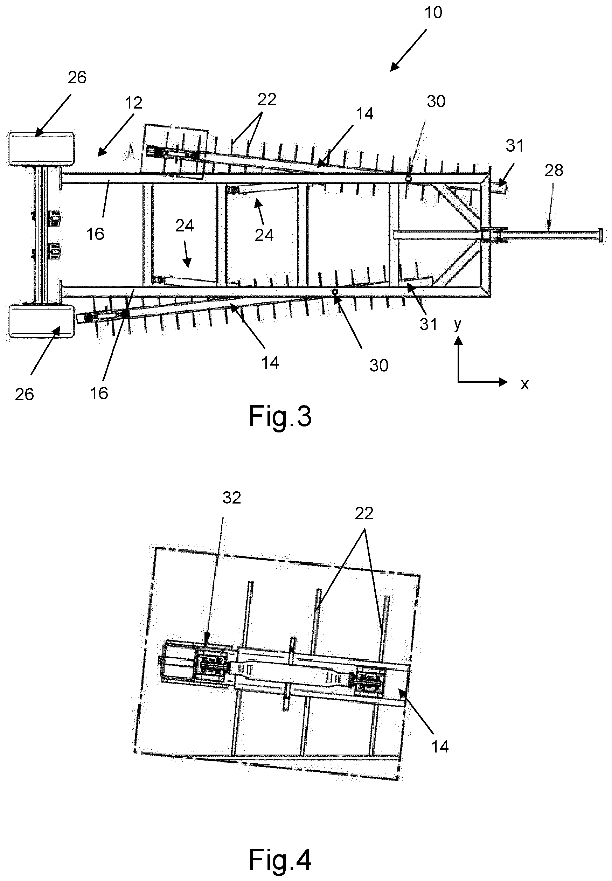

In Fig. 3 ist die Scheibeneggenvorrichtung 10 in einer Draufsicht gezeigt, wobei die Trägerarme 14 wiederum in ihrer Nichtgebrauchsstellung angeordnet sind. Vorliegend sind jeweilige Lagerstellen 30 zu erkennen, an welchen die Trägerarme 14 in der bereits beschriebenen Weise verschwenkbar an der Rahmenstruktur 12 gelagert sind. Die Lagerstellen 30 sind in Längsrichtung x voneinander beabstandet angeordnet. Jeweilige Teilbereiche 31 der Trägerarme 14 können sich dadurch ab einem bestimmten Schwenkwinkel bezogen auf die Querrichtung y in einem nicht näher bezeichneten mittleren Bereich der Scheibeneggenvorrichtung 10 überlappen. In den jeweiligen Arbeitsstellungen der Trägerarme 14 kann dadurch sichergestellt werden, dass eine quasi lückenlose Bodenbearbeitung durch die Scheiben 22, auch unterhalb von der Rahmenstruktur 12 erfolgen kann. Zudem können die Trägerarme 14 zumindest im Wesentlichen synchron und ohne miteinander zu kollidieren zwischen der herangeklappten Nichtgebrauchsstellung und ihren Arbeitsstellungen verschwenkt werden.

In Fig. 4 ist der in Fig. 3 gekennzeichnete Bereich A in einer Detailansicht von oben, also in einer Draufsicht auf die Scheibeneggenvorrichtung 10, gezeigt. Vorliegend ist eine am Trägerarm 14 angeordnete Spanneinrichtung 32 zu erkennen, mittels welcher die hier nicht näher bezeichnete Kette 20 gespannt werden kann. Sollte sich die Kette 20 aufgrund mechanischer Belastungen oder z.B. temperaturbedingt längen, kann die Kette 20 mittels der Spanneinrichtung 32 gespannt werden. An beiden Trägerarmen 14 ist eine solche Spanneinrichtung 32 vorgesehen.

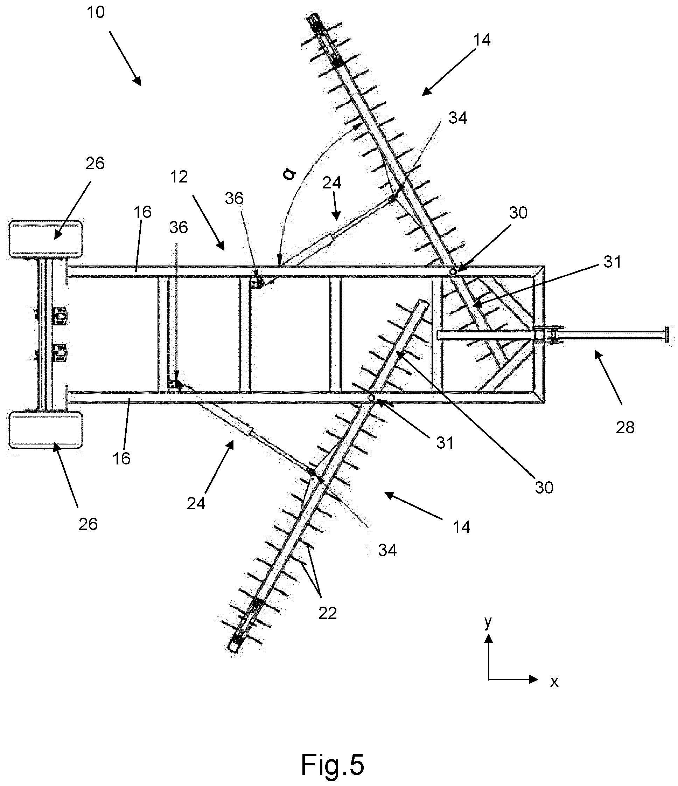

In Fig. 5 ist die Scheibeneggenvorrichtung 10 in einer weiteren Draufsicht gezeigt, wobei die Trägerarme 14 in einer nach außen geschwenkten Gebrauchsstellung angeordnet sind. Zwischen den Längsträgern 16 und den Trägerarmen wird gemäß der vorliegenden Darstellung ein Winkel α von ca. 60° eingeschlossen. Dies kann eine Art Endstellung sein, über welche die Trägerarme 14 nicht noch weiter nach außen geschwenkt werden können. Zwischen der hier gezeigten Stellung und der Nichtgebrauchsstellung können stufenlos weitere Arbeitsstellungen durch entsprechende Betätigung der Hydraulikzylinder 24 stufenlos eingestellt werden.

Vorliegend sind jeweilige Lagerstellen 34, 36 gekennzeichnet, an denen die Hydraulikzylinder 24 gelenkig mit den Trägerarmen 14 bzw. den Längsträgern 16 verbunden sind. Durch die gelenkige Lagerung können die Hydraulikzylinder 24 in einer durch die Querrichtung y und Längsrichtung x aufgespannten Ebene relativ zu den Längsträgern 16 und Trägerarmen 14 verschwenkt werden und somit jeweiligen Schwenkbewegungen der Trägerarme 14 folgen.

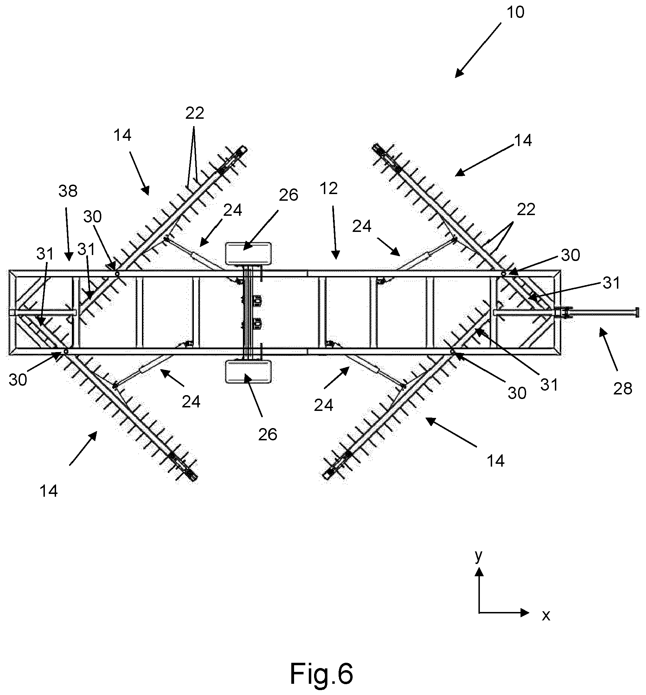

In Fig. 6 ist eine weitere mögliche Ausführungsform der Scheibeneggenvorrichtung 10 in einer Draufsicht gezeigt. An der Rahmenstruktur 12 ist eine weitere Rahmenstruktur 38 angeordnet, welche ihrerseits zwei der nach außen und innen schwenkbaren Trägerarme 14 aufweist. Die Rahmenstrukturen 12, 38 können jeweilige hier nicht näher bezeichnete Schnittstellen aufweisen, sodass die Rahmenstrukturen 12, 38 stirnseitig aneinander befestigt werden können, z.B. über eine Schraubverbindung oder anderweitige wieder lösbare Verbindungen. Die Trägerarme 14 und Hydraulikzylinder 24 sind so angeordnet, dass die an der Rahmenstruktur 12 angeordneten Trägerarme 14 und die an der weiteren Rahmenstruktur 38 angeordneten Trägerarme 14 gegenläufig zueinander verschwenkt werden können.

Die in Fahrtrichtung vorderen Trägerarme 14 an der Rahmenstruktur 12 können so z.B. den Boden aufreißen und die in Fahrtrichtung hinteren Trägerarme 14 an der Rahmenstruktur 38 können durch ihre entgegengesetzte Orientierung den Boden dann wiederum bedecken. Somit ist es in einem Arbeitsgang beispielsweise möglich, beim Überfahren eines Bodenabschnitts diesen aufzuschlitzen, aufzureißen und danach wieder abzudecken.

Mittels der Scheibeneggenvorrichtung 10 ist es also möglich, jeweilige Anstellwinkel der Scheiben 22 variabel und stufenlos gegenüber der Längsrichtung x der Scheibeneggenvorrichtung 10 und somit gegenüber der Fahrtrichtung der Scheibeneggenvorrichtung 10 zu verstellen.

### BEZUGSZEICHENLISTE

- 10: Scheibeneggenvorrichtung
- 12: Rahmenstruktur
- 14: Trägerarm
- 16: Längsträger
- 18: Achse
- 20: Kette
- 22: Scheibe
- 24: Hydraulikzylinder
- 26: Räder
- 28: Zugdeichsel
- 30: Lagerstellen der Trägerarme
- 31: Teilbereiche der Trägerarme
- 32: Spanneinrichtung
- 34: Lagerstellen der Hydraulikzylinder
- 36: Lagerstellen der Hydraulikzylinder
- 38: weitere Rahmenstruktur
- α: Winkel
- A: Bereich
- x: Längsrichtung der Scheibeneggenvorrichtung
- y: Querrichtung der Scheibeneggenvorrichtung
- z: Hochrichtung der Scheibeneggenvorrichtung

## Patentansprüche

1. Scheibeneggenvorrichtung (10) zur Bodenbearbeitung, umfassend
- eine Rahmenstruktur (12);
- wenigstens ein mit der Rahmenstruktur (12) zumindest mittelbar verbundenes Rad (26);
- zumindest einen Trägerarm (14) mit mehreren in zumindest einer Reihe angeordneten Scheiben (22) zur Bodenbearbeitung;
- wobei der Trägerarm (14) um eine in Hochrichtung (z) der Scheibeneggenvorrichtung (10) verlaufende Achse (18) verschwenkbar an der Rahmenstruktur (12) gelagert und mittels einem Verstellmechanismus bezogen auf eine Querrichtung (y) der Scheibeneggenvorrichtung (10) zwischen einer an die Rahmenstruktur (12) herangeklappten Nichtgebrauchsstellung und unterschiedlich weit herausgeschwenkten Arbeitsstellungen verstellbar ist.

2. Scheibeneggenvorrichtung (10) nach Anspruch 1,
**dadurch gekennzeichnet, dass**
der Verstellmechanismus einen Hydraulikzylinder (24) umfasst, welcher mit einem Längsende gelenkig mit der Rahmenstruktur (12) und mit einem anderen Längsende gelenkig am Trägerarm (14) befestigt ist.

3. Scheibeneggenvorrichtung (10) nach Anspruch 1 oder 2,
**dadurch gekennzeichnet, dass**
die Scheiben (22) auf einer Kette (20) hintereinander aufgereiht befestigt sind, welche drehbar am Trägerarm (14) gelagert ist.

4. Scheibeneggenvorrichtung (10) nach Anspruch 3,
**dadurch gekennzeichnet, dass**
am Trägerarm (14) eine Spanneinrichtung (32) angeordnet ist, mittels welcher eine Spannung der Kette (20) einstellbar ist.

5. Scheibeneggenvorrichtung (10) nach einem der vorhergehenden Ansprüche,
**dadurch gekennzeichnet, dass**
die Scheibeneggenvorrichtung (10) einen Höhenverstellmechanismus aufweist, mittels welchem ein Abstand zwischen Boden und den Scheiben (22) veränderbar ist.

6. Scheibeneggenvorrichtung (10) nach Anspruch 5,
**dadurch gekennzeichnet, dass**
mittels des Höhenverstellmechanismus die Rahmenstruktur (12) gegenüber dem wenigstens einen Rad (26) anhebbar und absenkbar ist.

7. Scheibeneggenvorrichtung (10) nach Anspruch 5 oder 6,
**dadurch gekennzeichnet, dass**
die Scheibeneggenvorrichtung (10) eine mit der Rahmenstruktur (12) verbundene Zugdeichsel (28) aufweist, welche mittels des Höhenverstellmechanismus höhenverstellbar ist.

8. Scheibeneggenvorrichtung (10) nach einem der vorhergehenden Ansprüche,
**dadurch gekennzeichnet, dass**
der Trägerarm (14) mittels des Verstellmechanismus stufenlos verschwenkbar ist.

9. Scheibeneggenvorrichtung (10) nach einem der vorhergehenden Ansprüche,
**dadurch gekennzeichnet, dass**
die Scheibeneggenvorrichtung (10) zwei der Trägerarme (14) aufweist, wobei diese an gegenüberliegenden Längsseiten der Rahmenstruktur (12) verschwenkbar gelagert sind.

10. Scheibeneggenvorrichtung (10) nach Anspruch 9,
**dadurch gekennzeichnet, dass**
jeweilige Lagerstellen (30), an welchen die Trägerarme (14) verschwenkbar an der Rahmenstruktur (12) gelagert sind, in Längsrichtung (x) der Scheibeneggenvorrichtung (10) voneinander beabstandet angeordnet sind, wobei jeweilige Teilbereiche (31) der Trägerarme (14) sich ab einem bestimmten Schwenkwinkel bezogen auf die Querrichtung (y) in einem mittleren Bereich der Scheibeneggenvorrichtung (10) überlappen.

11. Scheibeneggenvorrichtung (10) nach Anspruch 10,
**dadurch gekennzeichnet, dass**
die Trägerarme (14) zumindest im Wesentlichen synchron und ohne miteinander zu kollidieren zwischen der herangeklappten Nichtgebrauchsstellung und ihren Arbeitsstellungen verschwenkbar sind.

12. Scheibeneggenvorrichtung (10) nach einem der vorhergehenden Ansprüche,
**dadurch gekennzeichnet, dass**
die Scheibeneggenvorrichtung (10) wenigstens eine Schnittstelle aufweist, sodass an der Rahmenstruktur (12) ein weitere Rahmenstruktur (38) mit wenigstens einem verschwenkbar daran angeordneten Trägerarm (14) befestigbar ist.

13. Scheibeneggenvorrichtung (10) nach Anspruch 12,
**dadurch gekennzeichnet, dass**
die weitere Rahmenstruktur (38) derart anordnenbar ist, dass der daran angeordnete Trägerarm (14) gegenläufig zum anderen Trägerarm (14) verschwenkbar ist.
